# EUROPEAN PATENT SPECIFICATION

(11) **EP 3 470 790 B1**
(45) Date of publication and mention of the grant of the patent: **30.03.2022**
(21) Application number: 17810170.5
(22) Date of filing: 31.05.2017
(51) Int. Cl.: G01C 21/34, G08G 1/0969, G09B 29/00

(54) **INFORMATION PROCESSING DEVICE AND TRAVEL CONTROL SYSTEM**
INFORMATIONSVERARBEITUNGSVORRICHTUNG UND FAHRTSTEUERUNGSSYSTEM
DISPOSITIF DE TRAITEMENT D'INFORMATIONS ET SYSTÈME DE GESTION DE DÉPLACEMENT

(30) Priority: 10.06.2016 JP 2016116415
(43) Date of publication of application: 17.04.2019
(73) Proprietor: Hitachi Astemo, Ltd., Hitachinaka-shi, Ibaraki 312-8503 (JP)
(72) Inventor: OOTSUJI, Shinya, Hitachinaka-shi, Ibaraki 312-8503 (JP)
(74) Representative: Mewburn Ellis LLP
(86) International application number: PCT/JP2017/020196
(87) International publication number: WO 2017/212991

(56) References cited:
- EP-A2- 2 385 348
- EP-B1- 2 385 348
- WO-A1-2010/000706
- JP-A- 2006 221 047
- JP-A- 2016 057 655
- US-A1- 2015 247 732
- US-A1- 2016 138 924

## Description

### Technical Field

The present invention relates to an information processing apparatus and a travel control system, and for example, relates to an information processing apparatus and a travel control system configured to operate various devices, mounted on a vehicle by various travel control functions provided in the vehicle to automatically perform some or all of driving operations of the vehicle.

### Background Art

In recent years, a travel control system, which automatically drives a vehicle by automatically implementing some or all of driving operations of the vehicle, has been developed. As an example thereof, for example, a driving support control system, which automates some of driving operations of an occupant to support driving, such as inter-vehicle distance keeping travel control for keeping a constant inter-vehicle distance to a preceding vehicle traveling in front while recognizing external environment of the vehicle and traveling lane keeping control for travel control so as not to deviate from a traveling lane of an own vehicle, has been known in order to reduce a driving load of the occupant. In addition, as a developmental form thereof, a travel control system in which the system carries out all of driving operations without being operated by an occupant to automatically drive a vehicle has been also studied.

Meanwhile, there is a navigation system as an information providing device configured to support driving. The navigation system presents guidance information on travel to an occupant.

In this navigation system, information on a road to be guided may be provided in the case of indicating a route to reach a destination. In the recent travel control system described above, however, it is necessary to determine how to travel using a control unit mounted on the vehicle, and thus, it is necessary to have more detailed information (for example, information with high accuracy and density such as information on a traveling lane basis) as map information differently from a content (information) to be presented to the occupant, and a travel control map different from map information (a navigation map) used as navigation is required.

In this manner, the required information is different between the navigation map and the travel control map. Accordingly, expression formats are different from each other even when expressing the same road, and thus, it is necessary to specify a road corresponding to a route on the travel control map even if the route to the destination is obtained on the navigation map as in the related art. In addition, even if the navigation map and the travel control map are gathered in the same device and route search is performed based on the information thereof, map information used in route search and map information used in travel control are generally managed in separate methods of getting data. Thus, it is indispensable to associate route information on the search route described above and the map information used in the travel control with each road.

As a technique of associating a plurality of maps of different expressions, there is a known technique of performing abstraction by once converting a map into an expression format of map information aiming at an industry standard (for example, an open source expression method for position information reference such as OpenLR advocated by TomTom), and then searching for a similar section on another map.

In addition, PTL 1 discloses a conventional technique relating to a route search method using the travel control map as described above. In the method disclosed in PTL 1, it is determined that a road whose accuracy of a global positioning system (GPS) is low is a travel control impossible road (a road where it is difficult to perform automatic control driving) and travel control route search is performed so as to avoid such a road.

### Citation List

### Patent Literature

PTL 1: JP 2011-118603 A

EP 2 385 348 describes a road link string conversion method for converting first road link string data included in first map data into second road link string data included in second map data by deciding whether or not first coordinates-of-position strings corresponding to the first road link string data correspond to the second road link string data, constructing a second coordinates-of-position string by combining together the first coordinates-of-position strings decided as not corresponding to the second road link string data, establishing correspondence between the second coordinates-of-position string and the second road link string data and converting the first road link string data including the first coordinates-of-position strings decided as not corresponding to the second road link string data, to the second road link string data to which the second coordinates-of-position string corresponds.

WO 2010/000706 describes a method of resolving a location from an ordered list of location reference points being representative of nodes in an encoder digital map and each having attributes representative of a specific line or segment in said encoder digital map emanating from or incident at those nodes. The method comprises the steps of (i) for each location reference point, identifying at least one candidate node existing in a second digital map, and, using the available attributes of that location reference point, identifying at least one candidate line or segment existing in said second digital map emanating from or incident at said candidate node, (ii) performing a route search within said second digital map between: (a) at least one of said at least one candidate node and the corresponding candidate line or segment emanating therefrom or incident thereat, and (b) at least one of a candidate node for the next location reference point appearing in the list and the corresponding candidate line or segment emanating therefrom or incident thereat, and extracting from said second digital map each line or segment forming part of the route so determined between said candidate nodes, (iii) repeating step (ii) for each consecutive pair of location reference points up to and including the final location reference point appearing in the list.

US 2016/138924 discloses an autonomous vehicle traveling system comprising a global path planning unit searching a global path based on a driver map database (map for standard route calculation) and a detailed global path planning unit searching a detailed global path for autonomous driving based on the searched global path and an autonomous traveling map database (HD map for autonomous driving).

### Summary of Invention

### Technical Problem

However, there may be a case where it is difficult to make complete association due to the difference in expression format even if a route obtained by the map information used for route search is associated on the travel control map as described above. In addition, such a route section that is not associated becomes a section (correspondence-unclear section) where it is unclear whether it is a route that needs to be traveled or not on the travel control map, and thus, it is difficult to perform travel control substantially in such a section in the above-described travel control system.

In addition, it is substantially impossible to prescribe the travel control impossible road in advance for all of roads on a map as in the conventional technique disclosed in PTL 1.

The present invention has been made in view of the above problems, and an object thereof is to provide an information processing apparatus capable of continuing travel control along an appropriate route in as long a section as possible, for example, in a travel control system that automatically performs some or all of driving operations of a vehicle, and the travel control system.

### Solution to Problem

In order to solve the above-described problems, there is provided a travel control system according to independent claim 1.

### Advantageous Effects of Invention

According to the present invention, even if the route search map and the travel control map are different from each other, it is possible to make association in as many sections as possible, and as a result, it is possible to continue the travel control along the appropriate route in as long a section as possible.

Other objects, configurations, and effects which have not been described above become apparent from embodiments to be described hereinafter.

### Brief Description of Drawings

[FIG. 1] FIG. 1 is a block diagram illustrating an overall configuration according to a first embodiment of an in-vehicle processing system (travel control system) according to the present invention.
[FIG. 2] FIG. 2 is a block diagram illustrating internal configurations of a route search map unit and a travel control map unit illustrated in FIG. 1.
[FIG. 3] FIG. 3 is a flowchart describing a series of processes of the route search map unit and the travel control map unit illustrated in FIG. 1.
[FIG. 4] FIG. 4 is a schematic explanatory view schematically describing a series of processes of the route search map unit and the travel control map unit illustrated in FIG. 1.
[FIG. 5] FIG. 5 is a flowchart describing a series of processes of a route search map unit and a travel control map unit according to a second embodiment of the in-vehicle processing system (travel control system) according to the present invention.
[FIG. 6] FIG. 6 is a block diagram illustrating an overall configuration according to a third embodiment of the in-vehicle processing system (travel control system) according to the present invention.
[FIG. 7] FIG. 7 is a block diagram illustrating internal configurations of a travel control map center and a travel control map unit illustrated in FIG. 6.
[FIG. 8] FIG. 8 is a flowchart illustrating a series of processes of the travel control map center and the travel control map unit illustrated in FIG. 6.

### Description of Embodiments

Hereinafter, embodiments of the present invention will be described with reference to the drawings.

### [First Embodiment]

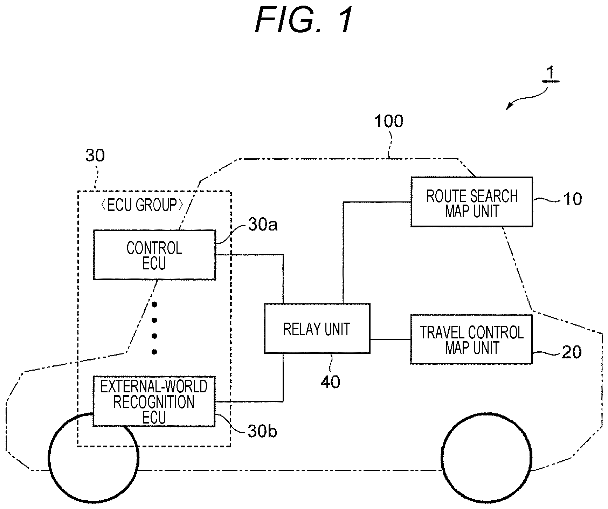

FIG. 1 is a block diagram illustrating an overall configuration of an in-vehicle processing system as a first embodiment of a travel control system according to the present invention.

As illustrated in FIG. 1, an in-vehicle processing system 1 of the present embodiment includes: a route search map unit (information processing apparatus) 10 mounted on a vehicle 100; a travel control map unit (information processing apparatus) 20; an ECU group 30 constituted by a plurality of ECUs such as a control ECU 30a and an external-world recognition ECU 30b; and a relay unit 40 that relays these respective units.

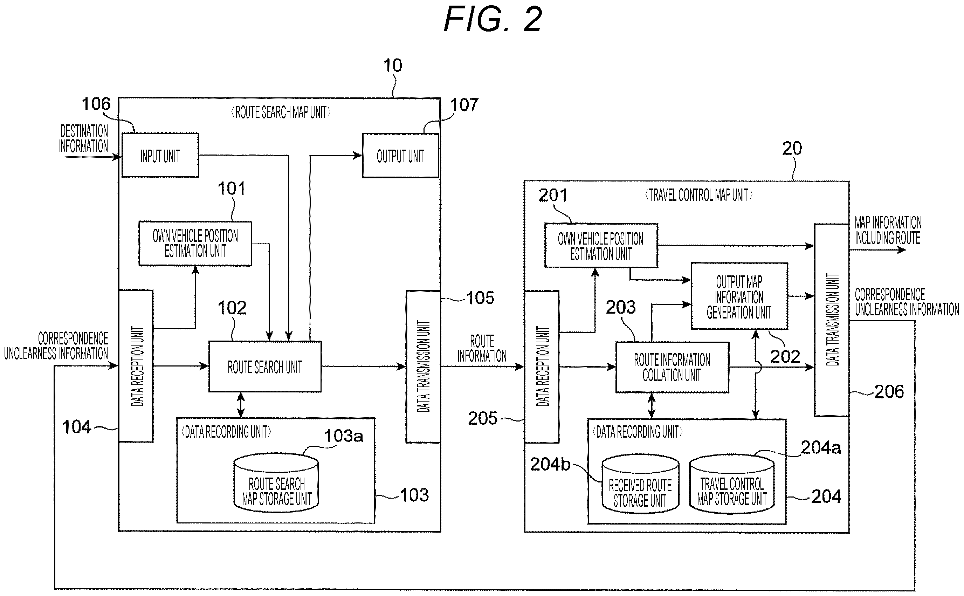

FIG. 2 is a block diagram illustrating internal configurations of the route search map unit and the travel control map unit illustrated in FIG. 1.

The route search map unit 10 includes not only an input unit 106, which receives information on a destination to be used for route search from an occupant of the vehicle 100, but also a vehicle position estimation unit 101 which estimates an own vehicle position, a route search unit 102 which searches a route from the own vehicle position to the destination, and a data recording unit 103 which includes a route search map storage unit (route search map storage unit) 103a storing a route search map to be used at the time of searching a route, and a satellite information receiving device such as a GPS (not illustrated) and sensors such as a gyroscope and an acceleration sensor are connected to the own vehicle position estimation unit 101. In addition, the route search map unit 10 includes a data reception unit 104 receiving information from the outside of the unit and a data transmission unit 105 transmitting information to the outside of the unit, can receive information (correspondence unclearness information to be described later) from the travel control map unit 20 in the data reception unit 104, and can output route information (information on a searched route) obtained by the route search unit 102 to the travel control map unit 20 in the data transmission unit 105. The route search map unit 10 also includes an output unit 107 that notifies the occupant of the vehicle 100 of the information by screen display or sound output (in other words, via a screen or voice).

The travel control map unit 20 includes: an own vehicle position estimation unit 201 which estimates an own vehicle position; a route information collation unit 203 which collates the route information transmitted from the route search map unit 10 and a travel control map (map different from the above-described route search map); an output map information generation unit 202 which generates map information (map information including a route) to be transmitted to the outside of the travel control map unit 20 based on the route information on the travel control route obtained by the route information collation unit 203; and a data recording unit 204 which includes a travel control map storage unit (travel control map storage unit) 204a storing travel control map to be used at the time of collation and a received route storage unit (search route acquisition unit) 204b storing the route information acquired from the route search map unit 10, and a satellite information receiving device such as a GPS (not illustrated) and sensors such as a gyroscope and an acceleration sensor are connected to the own vehicle position estimation unit 201. In addition, the travel control map unit 20 includes a data reception unit 205 receiving information from the outside of the unit and a data transmission unit 206 transmitting information to the outside of the unit, can receive the route information to a destination obtained by the route search map unit 10 in the data reception unit 205, and can output information (correspondence unclearness information to be described later) and the like obtained by the route information collation unit 203 to the route search map unit 10 in the data transmission unit 206.

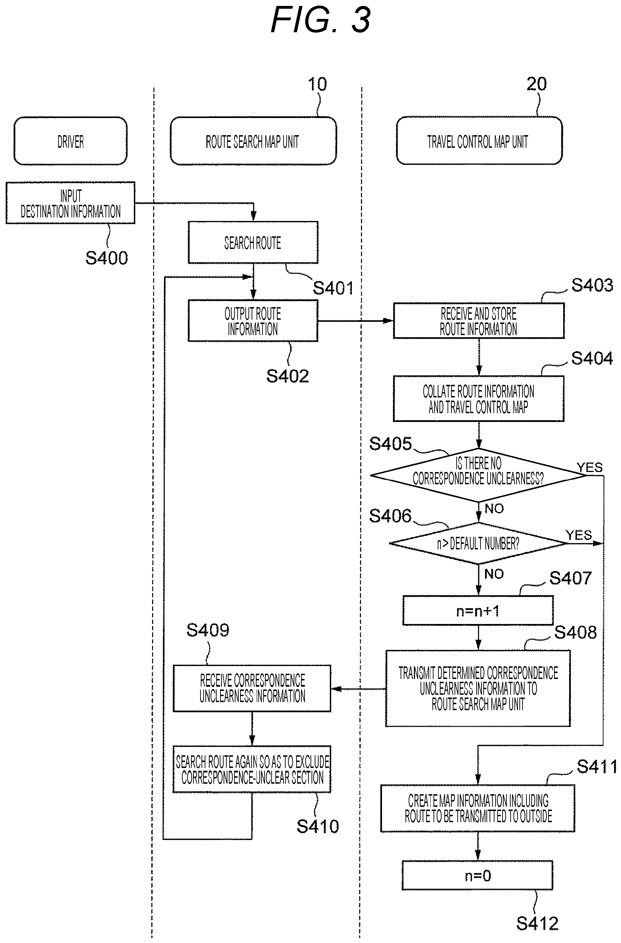

FIG. 3 is a flowchart describing an example of a series of processes of the route search map unit and the travel control map unit illustrated in FIG. 1.

First, the occupant inputs destination information via the input unit 106 of the route search map unit 10 (S400). When receiving the destination information, search for a route to a destination is performed by (the route search unit 102 of) the route search map unit 10 (S401). The obtained route information to the destination is output from (the data transmission unit 105 of) the route search map unit 10 to the travel control map unit 20 (S402).

The travel control map unit 20 receives the route information via the data reception unit 205 and stores the received (acquired) route information in the received route storage unit 204b in the data recording unit 204 (S403). When confirming that the route information has been stored in the received route storage unit 204b described above, the route information collation unit 203 of the travel control map unit 20 performs a collation process of collating any road on map data (travel control map) in the travel control map storage unit 204a that the route information corresponds to (S404). The collation process herein is a process of making whether association can be made between the route information and the map data (travel control map) in the travel control map storage unit 204a based on coordinate information of both the route information and the map data, road route information, road attribute information, and the like clear, and making where a point (correspondence-unclear point) or a section (correspondence-unclear section) is unclear if it is difficult to make association. Meanwhile, there is no particular limitation on how to perform collation in the collation process by the route information collation unit 203. When all the roads of the travel control map are associated with route information (that is, when there is no correspondence unclearness), the route information (searched route) is confirmed as a travel control route, a result of the collation is delivered to the output map information generation unit 202, and map information to be transmitted to the outside of the travel control map unit 20 is created by the output map information generation unit 202 based on the route information (S405 and S411). On the other hand, when there is a section (correspondence-unclear section) where the route information is hardly associated with (a part or a whole of) a road on the travel control map (that is, when there is correspondence unclearness), a numerical value "n" obtained by counting how many times this collation process has been executed is checked (S405 and S406). When this numerical value "n" is larger than a predetermined number set in advance, an associated road (that is, a searched route at that time) which is a collation result is confirmed as the travel control route and delivered to the output map information generation unit 202, and map information to be transmitted to the outside of the travel control map unit 20 is created by the output map information generation unit 202 based on the route information (S406 and S411) . On the other hand, when the numerical value "n" is equal to or smaller than the predetermined number, 1 is added to the numerical value "n" (S407), the correspondence unclearness information including correspondence-unclear section information (information on the section where it is difficult to make association) determined from the collation result is transmitted to the route search map unit 10 from the data transmission unit 206 (S408).

The route search map unit 10 receives the correspondence unclearness information via the data reception unit 104 (S409), and executes search for a route to the destination again with setting so as to exclude the correspondence-unclear section included in the correspondence unclearness information (S410). Then, information on the route to the destination obtained again is output to the travel control map unit 20 (S402).

A reason of comparison of the numerical value "n" indicating the number of times of executing the collation process in the above-described processing with the predetermined number is to avoid repetition of the processing indefinitely if a correspondence-unclear section still remains no matter how many times the processing is executed, and the predetermined number herein may be obtained such that the processing ends within a processing time allowed for this processing. Incidentally, the numerical value "n" is reset (n = 0) after creating the map information to be transmitted to the outside of the travel control map unit 20 (S411), or when receiving the searched route for the first time (S412).

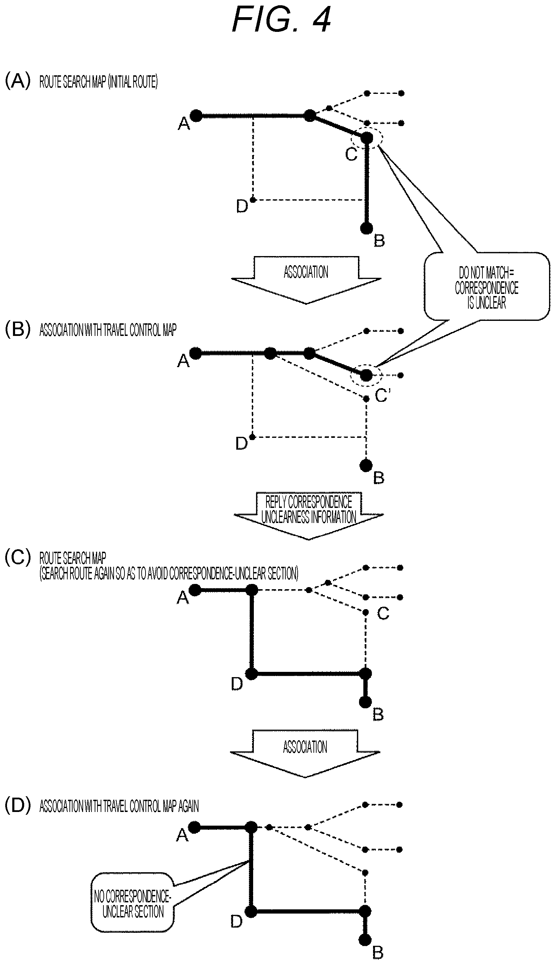

FIG. 4 is a schematic explanatory view schematically describing a series of processes of the route search map unit and the travel control map unit illustrated in FIG. 1, and illustrates an example of a concrete map image with respect to the series of processing flows illustrated in FIG. 3 described above.

(A) illustrates that a road indicated by a solid line passing through a point C in a section from a point A to a point B in the drawing is obtained as a search route by the route search in S401 in the route search map unit 10. As a result of delivering this route information to the travel control map unit 20 in S402 and S403 and performing the collation process in S404, association is erroneously made such that a route to the point C in the original search route is directed to a point C' having a similar road shape as illustrated in (B) since the travel control map has a slightly different shape from the route search map, so that it becomes difficult to make association in the subsequent route.

Thereafter, information on the point C is transmitted to the route search map unit 10 as the correspondence unclearness information in S408 and S409, and the route search map unit 10 performs route search again under a condition that the point C is avoided in S410. As a result, a search route (route information) reaching the point B from the point A passing through a point D is obtained as illustrated in (C). Then, this route information is delivered again to the travel control map unit 20 in S402 and S403, and the collation process with the travel control map is performed in S404. As a result, correct association is made so as to pass from the point A to the point B via the point D as illustrated in (D), and it is possible to make association of the route with no correspondence-unclear section. As a result, the route illustrated in (D) is determined as the route information to be transmitted to the outside in S411 in this example.

Here, an example of the above-described correspondence unclearness information is latitude and longitude coordinate notation (position marking) of a correspondence-unclear section and a correspondence-unclear point determined at the route information collation unit 203. In addition, identification information (for example, a link number) indicating a connection of a correspondence-unclear section may be added (see also FIG. 4). Further, information (road attribute information) indicating a road attribute of a correspondence-unclear section and a correspondence-unclear point such as a main lane, and a ramp way may be added. In addition, information that becomes a reason for correspondence unclearness determined by the route information collation unit 203 (for example, "there is no corresponding point in a specific range", "a shape of a branch point is different", "a newly open section", or the like) may be added.

In addition, when the route information is output from the route search map unit 10 to the travel control map unit 20 (S402), the entire search route to the destination may be collectively output as described above, or route information divided in units of sections according to a predetermined rule may be sequentially output to the travel control map unit 20 in accordance with movement of the own vehicle and the above-described series of collation processes may be executed in units of divided route sections.

In addition, the map information (map information including the route created by the output map information generation unit 202) finally obtained in S411 of FIG. 3 described above may be transmitted to the route search map unit 10, and the occupant may be informed that the route has been determined after considering the presence of the correspondence-unclear section, or that the search route has no correspondence-unclear section or a small correspondence-unclear section as the travel control route via an in-vehicle screen display and sound output from the output unit 107 in the route search map unit 10.

In this manner, according to the first embodiment, the search route searched based on the route search map different from the travel control map is collated with the travel control map, and the correspondence unclearness information is output when a part or the whole of the search route has unclear correspondence with the travel control map. Thus, it is possible to make association in as many sections as possible even if the route search map and the travel control map are different, and as a result, it is possible to continue the travel control along the appropriate route in as long a section as possible.

### [Second Embodiment]

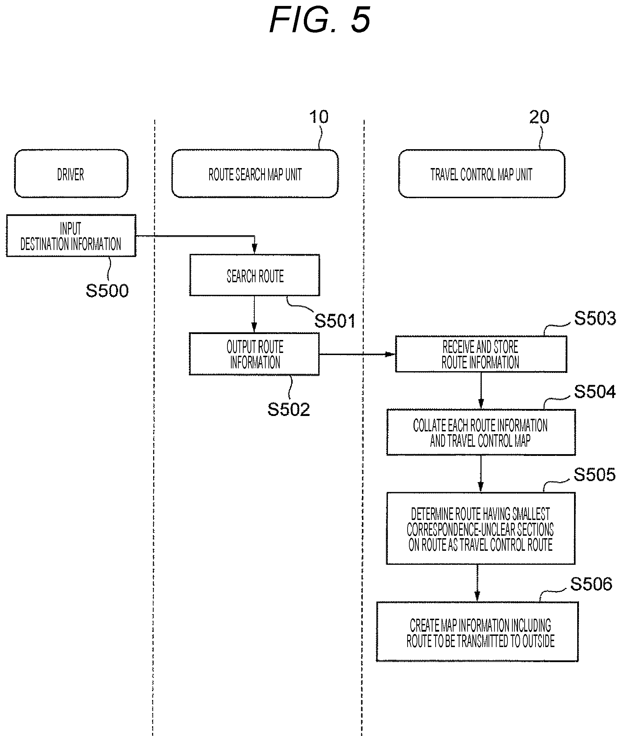

FIG. 5 is a flowchart describing a series of processes of a route search map unit and a travel control map unit in an in-vehicle processing system as a second embodiment of the travel control system according to the present invention.

A configuration of the in-vehicle processing system of the second embodiment is the same as that of the in-vehicle processing system of the first embodiment illustrated in FIG. 1, and configurations of the route search map unit (information processing apparatus) 10 and the travel control map unit (information processing apparatus) 20 thereof are substantially the same as the configurations of the route search map unit 10 and the travel control map unit 20 according to the first embodiment illustrated in FIG. 2. However, the second embodiment is different from the first embodiment in terms that the route search map unit 10 can output a plurality of route results (search routes) based on different evaluation values in the route search unit 102, and the travel control map unit 20 can collate the plurality of search routes with a travel control map in the route information collation unit 203, and thus, such differences will be mainly described hereinafter.

First, the occupant inputs destination information via the input unit 106 of the route search map unit 10 (S500). When receiving the destination information, search for a route to a destination is performed by (the route search unit 102 of) the route search map unit 10 (S501). In the route searching process of the present embodiment, a plurality of routes to the destination is calculated based on several evaluation values such as a travel distance, fuel consumption, and a traveling fee. The obtained information on the plurality of routes to the destination is output from (the data transmission unit 105 of) the route search map unit 10 to the travel control map unit 20 (S502).

The travel control map unit 20 receives the route information via the data reception unit 205 and stores the received (acquired) route information in the received route storage unit 204b in the data recording unit 204 (S503). When confirming that the route information has been stored in the received route storage unit 204b described above, the route information collation unit 203 of the travel control map unit 20 performs a collation process of collating any road on map data (travel control map) in the travel control map storage unit 204a that each piece of the route information corresponds to (S504). There is no particular limitation on how to perform collation in the collation process herein, which is similar to the above-described first embodiment. As a result of the collation, a search route having the smallest correspondence-unclear sections on the search route is selected, and this search route is determined as a travel control route (S505). Thereafter, the determined travel control route information (information including the travel control route) is delivered to the output map information generation unit 202, and map information to be transmitted to the outside of the travel control map unit 20 is created by the output map information generation unit 202 based on the route information (S506).

In addition, the map information (map information including the route created by the output map information generation unit 202) finally obtained in S506 of FIG. 5 described above may be transmitted to the route search map unit 10, and the occupant may be informed that the route has been determined after considering the presence of the correspondence-unclear section, or that the search route has no correspondence-unclear section or a small correspondence-unclear section as the travel control route via an in-vehicle screen display and sound output from the output unit 107 in the route search map unit 10.

In this manner, even in the second embodiment, the plurality of search routes searched based on the route search map different from the travel control map is collated with the travel control map, and one of the plurality of search routes is selected and output based on the correspondence unclearness information with respect to the travel control map of each of the search routes. Thus, it is possible to make association in as many sections as possible even if the route search map and the travel control map are different, and as a result, it is possible to continue the travel control along the appropriate route in as long a section as possible, so that the same operational effects as those of the first embodiment can be obtained.

### [Third Embodiment]

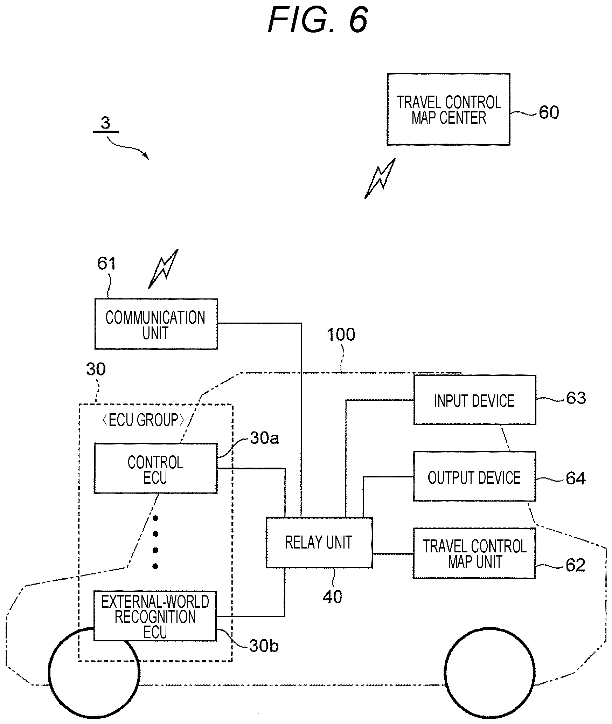

FIG. 6 is a block diagram illustrating an overall configuration of an in-vehicle processing system as a third embodiment of the travel control system according to the present invention.

An in-vehicle processing system 3 of the present embodiment has the same configuration as the in-vehicle processing system 1 of the first embodiment in terms of being mounted to the vehicle 100, but includes a communication unit 61 capable of communicating with a travel control map center (information processing apparatus) 60 provided outside the vehicle. In addition, a travel control map unit (information processing apparatus) 62 illustrated in FIG. 6 is substantially the same as the travel control map unit 20 in FIG. 1, but some functions thereof are removed due to functions sharing with a travel control map center 60 to be described later. Further, the in-vehicle processing system 3 includes an input device 63 that receives an input from a driver (occupant) and an output device 64 that provides information to the driver via an in-vehicle monitor or sound output. Incidentally, the ECU group 30 and the relay unit 40 other than the above-described parts are substantially the same as the ECU group 30 and the relay unit 40 in FIG. 1.

The travel control map center 60 provided outside the vehicle mainly executes a process of searching for a route to a destination based on destination information obtained from a target vehicle 100, generating travel control map control information along the searched route, and transmitting the information to the target vehicle 100. The travel control map unit 62 mounted on the vehicle 100 executes a process of estimating a travel position of an own vehicle, and has a function of transmitting the estimated position to the outside (the travel control map center 60 of) the travel control map unit 62 together with the travel control map information received from the travel control map center 60 described above.

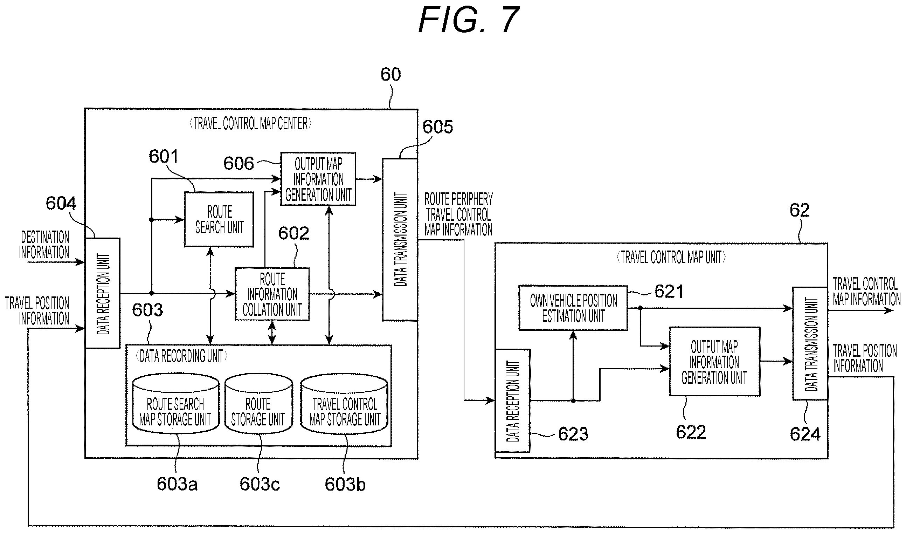

FIG. 7 is a block diagram illustrating internal configurations of the travel control map center and the travel control map unit illustrated in FIG. 6.

The travel control map center 60 includes: a route search unit 601 that searches for a route from the own vehicle position to the destination; a route information collation unit 602 that collates route information obtained by the route search unit 601 with a travel control map; an output map information generation unit 606; and a data recording unit 603. The data recording unit 603 includes: a route search map storage unit (route search map storage unit) 603a storing a route search map to be used in a route search process; a travel control map storage unit (travel control map storage unit) 603b storing the travel control map to be used for the collation process; and a route storage unit (search route acquisition unit) 603c storing the route information obtained by the route search unit 601. In addition, the travel control map center 60 includes a data reception unit 604 that receives information from the outside of the travel control map center 60, and a data transmission unit 605 that transmits information to the outside of the travel control map center 60. The data reception unit 604 can receive destination information, travel position information, and the like transmitted from the travel control map unit 62 of the target vehicle 100, and the route search unit 601 can store the route information to the destination in the route storage unit 603c in the data recording unit 603 based on the destination information and the like. The data transmission unit 605 can output the information obtained by the route information collation unit 602 and map information (route periphery travel control map information) including the route created by the output map information generation unit 606, and the like to the travel control map unit 62.

The travel control map unit 62 includes an own vehicle position estimation unit 621 that estimates the own vehicle position and an output map information generation unit 622 that generates map information to be transmitted to the outside of the travel control map unit 62 based on the map information transmitted from the travel control map center 60, the latest own vehicle position information, and the like, and a satellite information receiving device such as a GPS (not illustrated) and sensors such as a gyroscope and an acceleration sensor are connected to the own vehicle position estimation unit 621. In addition, the travel control map unit 62 includes a data reception unit 623 that receives information from the outside of the unit including the information from the travel control map center 60, and a data transmission unit 624 that transmits information to the outside of the unit.

Incidentally, the output map information generation unit 606 of the travel control map center 60, the route information collation unit 602 of the travel control map center 60, and the own vehicle position estimation unit 621 of the travel control map unit 62 in FIG. 7 have the same functions as the output map information generation unit 202, the route information collation unit 203, and the own vehicle position estimation unit 201 of the travel control map unit 20 in FIG. 2, respectively.

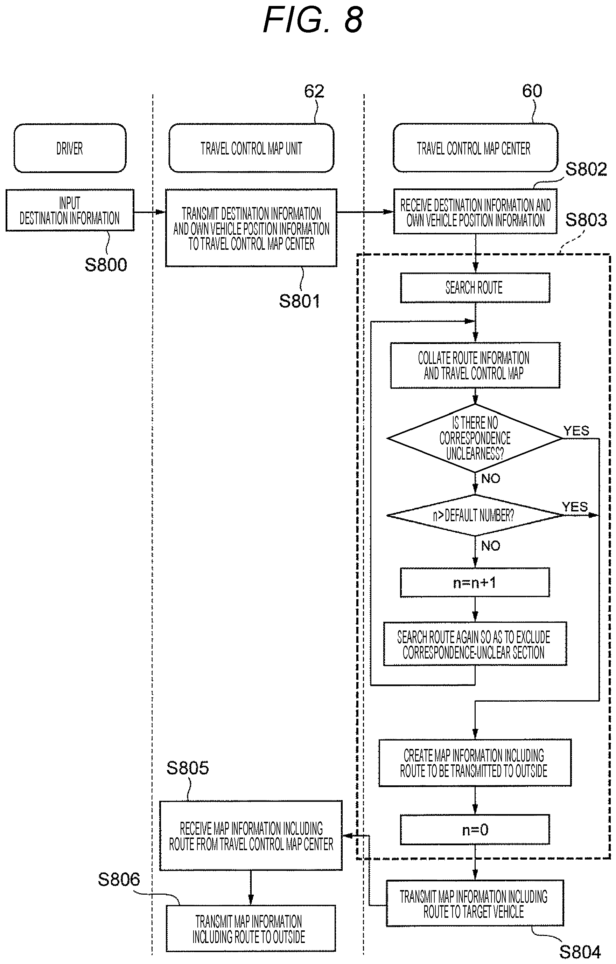

FIG. 8 is a flowchart illustrating a series of processes of the travel control map center and the travel control map unit illustrated in FIG. 6.

First, the driver inputs destination information using the input device 63 (S800) . The travel control map unit 62 transmits the input destination information and the vehicle position information estimated in the own vehicle position estimation unit 621 to the travel control map center 60 using the communication unit 61 (S801) . The travel control map center 60 receives the destination information of the target vehicle 100 and the own vehicle position information via the data reception unit 604 (S802). Thereafter, the route search unit 601, the route information collation unit 602, and the like execute processes enclosed in S803 of FIG. 8. Incidentally, the flow of the processes enclosed in S803 is almost the same as the processing flow (S401 to S412 in FIG. 3) described in the first embodiment, and thus, the description thereof will be omitted here. Then, the map information including the route created in S803 is replied to (the travel control map unit 62 mounted in) the target vehicle 100 via the data transmission unit 605 (S804).

The travel control map unit 62 receives the map information transmitted from the travel control map center 60 via the communication unit 61 (S805). The received map information is shaped into a predetermined format in accordance with the latest own vehicle position information (information obtained from the own vehicle position estimation unit 621) by the output map information generation unit 622, and then, transmitted to the outside of the travel control map unit 62 through the data transmission unit 624 (S806).

Incidentally, when travel control is performed on map information including a new route output from the travel control map unit 62 in S806 of FIG. 8, the occupant may be informed that the route has been determined after considering the presence of the correspondence-unclear section, or that the search route has no correspondence-unclear section or a small correspondence-unclear section as the travel control route via an in-vehicle screen display and sound output which is the output device 64.

In addition, the series of processes of the in-vehicle processing system of the second embodiment may be applied to the configuration of the third embodiment. More specifically, the route search unit 601 of the travel control map center 60 may search for a plurality of routes, the route information collation unit 602 may collate the plurality of search routes with a travel control map to determine (select) a search route having the smallest correspondence-unclear section out of the plurality of search routes as a travel control route, the output map information generation unit 606 may generate map information including the determined search route and reply such map information to the target vehicle 100 via the data transmission unit 605, and then, the map information including the route may be used by the travel control map unit 62 mounted on the target vehicle 100.

In addition, the route search unit 601, the route information collation unit 602, the output map information generation unit 606, and the data recording unit 603 (the route search map storage unit 603a, the travel control map storage unit 603b, and the route storage unit 603c) are provided in the travel control map center 60 provided outside the vehicle in the third embodiment, but some of these units may be provided on the travel control map unit 62 side. That is, some of the route search unit 601, the route information collation unit 602, the output map information generation unit 606, and the data recording unit 603 (the route search map storage unit 603a, the travel control map storage unit 603b, and the route storage unit 603c) may be provided in the travel control map center 60.

Even in the third embodiment, it is possible to make association in as many sections as possible, and as a result, it is possible to continue travel control along an appropriate route in as long a section as possible, so that the same operational effects as those of the first and second embodiments can be obtained, and the route search unit 601, the route information collation unit 602, the data storage unit 603, and the like can be collectively installed inside the travel control map center (information processing apparatus) 60 provided outside the vehicle.

Incidentally, the present invention is not limited to the above-described embodiments, and includes various modifications falling under the scope of the appended claims. For example, the above-described embodiments have been described in detail in order to describe the present invention in an easily understandable manner, and are not necessarily limited to one including the entire configuration that has been described above.

In addition, a part or all of each of the above-described configurations, functions, processing units, processing means, and the like may be realized, for example, by hardware by designing with an integrated circuit and the like. In addition, each of the above-described configurations, functions, and the like may also be realized by software by causing a processor to interpret and execute a program for realizing each of the functions. Information such as programs, tables, and files that realize the respective functions can be installed in a storage device such as a memory, a hard disk, and a solid state drive (SSD), or a recording medium such as an IC card, an SD card, and a DVD.

In addition, only control lines and information lines considered to be necessary for the description have been illustrated, and all of the control lines and information lines required as a product are not necessarily illustrated. It may be considered that most of the configurations are practically connected to each other.

### Reference Signs List

1 in-vehicle processing system (travel control system)
10 route search map unit (information processing apparatus)
20 travel control map unit (information processing apparatus)
30 ECU group
40 relay unit
101 own vehicle position estimation unit
102 route search unit
103 data recording unit
103a route search map storage unit (route search map storage unit)
104 data reception unit
105 data transmission unit
106 input unit
107 output unit
201 own vehicle position estimation unit
202 output map information generation unit
203 route information collation unit
204 data recording unit
204a travel control map storage unit (travel control map storage unit)
204b received route storage unit (search route acquisition unit)
205 data reception unit
206 data transmission unit
60 travel control map center (information processing apparatus)
61 communication unit
62 travel control map unit (information processing apparatus)
63 input device
64 output device
601 route search unit
602 route information collation unit
603 data recording unit
603a route search map storage unit (route search map storage unit)
603b travel control map storage unit (travel control map storage unit)
603c route storage unit (search route acquisition unit)
604 data reception unit
605 data transmission unit
606 output map information generation unit
621 own vehicle position estimation unit
622 output map information generation unit
623 data reception unit
624 data transmission unit

## Claims

1. A travel control system (1) configured for automatically performing at least some driving operations of a vehicle, comprising:
a route search map storage unit (103a,603a) that stores a route search map;
a travel control map storage unit (204a,603b) that stores a travel control map different from the route search map;
a route search unit (102,601) that searches for a search route based on the route search map stored in the route search map storage unit;
a search route acquisition unit (204b) that acquires a search route searched based on a route search map different from the travel control map; and
a route information collation unit (203,602) that collates the search route searched by the route search unit and acquired by the search route acquisition unit, and the travel control map stored in the travel control map storage unit, and outputs correspondence unclearness information when a part or a whole of the search route has unclear correspondence with the travel control map,
wherein the correspondence unclearness information indicates a point or a section where an association between the search route and the travel control map is difficult to make based on coordinate information of both the search route and the travel control map,
**characterized in that**:
the route search unit searches for a search route different from the search route based on the correspondence unclearness information output from the route information collation unit;
the process of collating a search route, searched again by the route search unit, with the travel control map again by the route information collation unit, outputting the correspondence unclearness information again when a part or a whole of the search route has unclear correspondence with the travel control map, and performing search for a search route different from the search route again by the route search unit, is repeated; and
the route information collation unit confirms a route searched as a travel control route at a time when there is no correspondence-unclear section with respect to the travel control map or confirms the route searched as the travel control route at the time when the process is repeated for a predetermined number of times even if there is the correspondence-unclear section with respect to the travel control map.

2. The travel control system according to claim 1, wherein
the correspondence unclearness information output from the route information collation unit includes at least one of position information of a correspondence-unclear point or a correspondence-unclear section, connection information on a correspondence-unclear section, road attribute information of a correspondence-unclear point or a correspondence-unclear section, and information that becomes a reason for correspondence unclearness.

3. The travel control system according to claim 1,
wherein the search route acquisition unit acquires a plurality of search routes searched based on the route search map;
wherein the route information collation unit collates the plurality of search routes acquired by the search route acquisition unit and the travel control map and selects and outputs one of the plurality of search routes based on correspondence unclearness information with respect to the travel control map of each of the search routes;
wherein the correspondence unclearness information includes information on correspondence-unclear sections; and
wherein the selected search route has the smallest correspondence-unclear section.

4. The travel control system according to claim 1, the travel control system constituted by a route search information processing apparatus (10) comprising the route search map storage unit and the route search unit and a travel control information processing apparatus (20) comprising the travel control map storage unit and the route information collation unit.

5. The travel control system according to claim 1,
wherein at least one of the route search map storage unit, the route search unit, the travel control map storage unit, the route information collation unit, and an output map information generation unit (202) that generates travel control map information to be output to an outside of the travel control map unit based on the travel control route obtained from the route information collation unit is provided inside an information processing apparatus provided outside a vehicle.

6. The travel control system according to claim 1, wherein
when the route information collation unit confirms a search route as a travel control route, an occupant of a vehicle is informed that there is no correspondence-unclear section or a small correspondence-unclear section in the confirmed search route as the travel control route via a screen and/or voice.

7. The travel control system according to claim 1,
wherein the route search unit searches for a plurality of search routes based on the route search map stored in the route search map storage unit; and
wherein the route information collation unit collates the plurality of search routes searched by the route search unit and the travel control map stored in the travel control map storage unit, and selects and outputs one of the plurality of search routes based on correspondence unclearness information with respect to the travel control
map of each of the search routes;
wherein the correspondence unclearness information includes information on correspondence-unclear sections; and
wherein the selected search route has the smallest correspondence-unclear section.

## Patentansprüche

1. Fahrsteuersystem (1), das ausgelegt ist, um zumindest einige Steuervorgänge eines Fahrzeugs automatisch durchzuführen, und das Folgendes umfasst:
eine Speichereinheit (103a, 603a) für eine Routensuchkarte, die eine Routensuchkarte speichert;
eine Speichereinheit (204a, 603b) für eine Fahrsteuerungskarte, die eine Fahrsteuerungskarte speichert, die sich von der Routensuchkarte unterscheidet;
eine Routensucheinheit (102, 601), die auf Grundlage der in der Routensuchkarten-Speichereinheit gespeicherten Routensuchkarte nach einer Suchroute sucht;
eine Suchroutenerfassungseinheit (204b), die eine Suchroute erfasst, die auf Grundlage einer Routensuchkarte gesucht wurde, die sich von der Fahrsteuerungskarte unterscheidet; und
eine Routeninformationsabgleicheinheit (203, 602), die die Suchroute, die durch die Routensucheinheit gesucht und durch die Suchroutenerfassungseinheit erfasst wurde, und die Fahrsteuerungskarte, die in der Fahrsteuerungskarten-Speichereinheit gespeichert ist, abgleicht und Informationen zur Unklarheit der Übereinstimmung ausgibt, wenn ein Teil oder die gesamte Suchroute eine unklare Übereinstimmung mit der Fahrsteuerungskarte aufweist,
wobei die Informationen zur Unklarheit der Übereinstimmung einen Punkt oder einen Abschnitt angeben, wo ein Zusammenhang zwischen der Suchroute und der Fahrsteuerungskarte auf Grundlage von Koordinateninformationen der Suchroute und der Fahrsteuerungskarte schwierig herzustellen ist,
**dadurch gekennzeichnet, dass**:
die Routensucheinheit nach einer Suchroute auf Grundlage der durch die Routeninformationsabgleicheinheit ausgegebenen Informationen zur Unklarheit der Übereinstimmung eine Suchroute sucht, die sich von der Suchroute unterscheidet;
der Prozess des Abgleichens einer Suchroute, die erneut durch die Routensucheinheit gesucht wurde, mit der Fahrsteuerungskarte durch die Routeninformationsabgleicheinheit, die erneut Informationen zur Unklarheit der Übereinstimmung ausgibt, wenn ein Teil oder die gesamte Suchroute eine unklare Übereinstimmung mit der Fahrsteuerungskarte aufweist und durch die Suchrouteneinheit erneut eine Suche nach einer Suchroute durchführt, die sich von der Suchroute unterscheidet, wiederholt wird; und
die Routeninformationsabgleicheinheit eine gesuchte Route als Fahrsteuerungsroute zu einem Zeitpunkt bestätigt, wenn es keinen Abschnitt mit unklarer Übereinstimmung in Bezug auf die Fahrsteuerungskarte gibt, oder die gesuchte Route als Fahrsteuerungsroute zu einem Zeitpunkt bestätigt, wenn der Prozess eine vorbestimmte Anzahl an Malen wiederholt wurde, auch wenn es einen Abschnitt mit unklarer Übereinstimmung in Bezug auf die Fahrsteuerungskarte gibt.

2. Fahrsteuersystem nach Anspruch 1, wobei
die durch die Routeninformationsabgleicheinheit ausgegebenen Informationen zur Unklarheit der Übereinstimmung zumindest eines der folgenden umfasst:
Positionsinformationen eines Punkts mit unklarer Übereinstimmung oder eines Abschnitts mit unklarer Übereinstimmung, Verbindungsinformationen in Bezug auf einen Abschnitt mit unklarer Übereinstimmung, Straßenattributinformationen eines Punkts mit unklarer Übereinstimmung oder eines Abschnitts mit unklarer Übereinstimmung und Informationen, die ein Grund sind für Unklarheit der Übereinstimmung.

3. Fahrsteuersystem nach Anspruch 1,
wobei die Suchroutenerfassungseinheit eine Vielzahl von Suchrouten erfasst, die auf Grundlage der Routensuchkarte gesucht wurden;
wobei die Routeninformationsabgleicheinheit die Vielzahl von Suchrouten, die durch die Suchroutenerfassungseinheit erfasst wurden und die Fahrsteuerungskarte abgleicht und eine aus der Vielzahl von Suchrouten auf Grundlage von Informationen zur Unklarheit der Übereinstimmung in Bezug auf die Fahrsteuerungskarte von jeder der Suchrouten auswählt und ausgibt;
wobei die Informationen zur Unklarheit der Übereinstimmung Informationen in Bezug auf Abschnitte mit unklarer Übereinstimmung umfasst; und
wobei die ausgewählte Suchroute den kleinsten Abschnitt mit unklarer Übereinstimmung aufweist.

4. Fahrsteuersystem nach Anspruch 1, wobei das Fahrsteuersystem durch Folgendes gebildet wird: eine Routensuchinformationsverarbeitungsvorrichtung (10), die die Speichereinheit für eine Routensuchkarte und die Routensucheinheit umfasst, und eine Fahrsteuerinformationsverarbeitungsvorrichtung (20), die die Speichereinheit für eine Fahrsteuerungskarte und die Routeninformationsabgleicheinheit umfasst.

5. Fahrsteuersystem nach Anspruch 1, wobei zumindest eine von der Speichereinheit für eine Routensuchkarte, der Routensucheinheit, der Fahrsteuerungskarten-Speichereinheit, der Routeninformationsabgleicheinheit und einer Informationserstellungseinheit (202) für eine ausgegebene Karte, die auf Grundlage der von der Routeninformationsabgleicheinheit erhaltenen Fahrsteuerroute Informationen für Fahrsteuerungskarten erzeugt, die von der Fahrsteuerkarteneinheit nach außen ausgegeben werden, im Inneren einer Informationsverarbeitungsvorrichtung bereitgestellt ist, die außerhalb eines Fahrzeugs bereitgestellt ist.

6. Fahrsteuersystem nach Anspruch 1, wobei
wenn die Routeninformationsabgleicheinheit eine Suchroute als Fahrsteuerroute bestätigt, ein Insasse eines Fahrzeugs über einen Bildschirm und/oder Sprachausgabe informiert wird, dass es keinen Abschnitt mit unklarer Übereinstimmung oder einen Abschnitt mit wenig unklarer Übereinstimmung auf der bestätigten Suchroute als Fahrsteuerroute gibt.

7. Fahrsteuersystem nach Anspruch 1,
wobei die Suchrouteneinheit auf Grundlage der in der Speichereinheit für eine Routensuchkarte gespeicherten Routensuchkarte eine Vielzahl von Suchrouten sucht; und
wobei die Routeninformationsabgleicheinheit die Vielzahl von Suchrouten, die durch die Routensucheinheit gesucht wurden, und die Fahrsteuerungskarte, die in der Fahrsteuerungskarten-Speichereinheit gespeichert ist, abgleicht und eine aus der Vielzahl von Suchrouten auf Grundlage von Informationen zur Unklarheit der Übereinstimmung in Bezug auf die Fahrsteuerungskarte von jeder der Suchrouten auswählt und ausgibt;
wobei die Informationen zur Unklarheit der Übereinstimmung Informationen in Bezug auf Abschnitte mit unklarer Übereinstimmung umfassen; und
wobei die ausgewählte Suchroute den kleinsten Abschnitt mit unklarer Übereinstimmung aufweist.

## Revendications

1. Système de commande de déplacement (1) configuré pour effectuer automatiquement au moins certaines opérations de conduite d'un véhicule, comprenant :
une unité de stockage de carte de recherche d'itinéraire (103a, 603a) qui stocke une carte de recherche d'itinéraire ;
une unité de stockage de carte de commande de déplacement (204a, 603b) qui stocke une carte de commande de déplacement différente de la carte de recherche d'itinéraire ;
une unité de recherche d'itinéraire (102, 601) qui recherche un itinéraire de recherche sur la base de la carte de recherche d'itinéraire stockée dans l'unité de stockage de carte de recherche d'itinéraire ;
une unité d'acquisition d'itinéraire de recherche (204b) qui acquiert un itinéraire de recherche recherché sur la base d'une carte de recherche d'itinéraire différente de la carte de commande de déplacement ; et
une unité de collecte d'informations d'itinéraire (203, 602) qui collecte l'itinéraire de recherche recherché par l'unité de recherche d'itinéraire et acquis par l'unité d'acquisition d'itinéraire de recherche, et la carte de commande de déplacement stockée dans l'unité de stockage de carte de commande de déplacement, et délivre en sortie des informations de manque de clarté de correspondance lorsqu'une partie ou une totalité de l'itinéraire de recherche a une correspondance imprécise avec la carte de commande de déplacement,
dans lequel les informations de manque de clarté de correspondance indiquent un point ou une section où une association entre l'itinéraire de recherche et la carte de commande de déplacement est difficile à établir sur la base d'informations de coordonnées à la fois de l'itinéraire de recherche et de la carte de commande de déplacement,
**caractérisé en ce que** :
l'unité de recherche d'itinéraire recherche un itinéraire de recherche différent de l'itinéraire de recherche sur la base des informations de manque de clarté de correspondance délivrées en sortie par l'unité de collecte d'informations d'itinéraire ;
le processus de collecte d'un itinéraire de recherche, recherché à nouveau par l'unité de recherche d'itinéraire, avec la carte de commande de déplacement à nouveau par l'unité de collecte d'informations d'itinéraire, délivrant en sortie les informations de manque de clarté de correspondance à nouveau lorsqu'une partie ou une totalité de l'itinéraire de recherche a une correspondance non claire avec la carte de commande de déplacement, et exécutant la recherche d'un itinéraire de recherche différent de l'itinéraire de recherche à nouveau par l'unité de recherche d'itinéraire, est répété ; et
l'unité de collecte d'informations d'itinéraire confirme un itinéraire recherché en tant qu'itinéraire de commande de déplacement à un moment où il n'y a pas de section de correspondance non claire par rapport à la carte de commande de déplacement ou confirme l'itinéraire recherché en tant qu'itinéraire de commande de déplacement au moment où le processus est répété un nombre prédéterminé de fois même s'il y a la section de correspondance non claire par rapport à la carte de commande de déplacement.

2. Système de commande de déplacement selon la revendication 1, dans lequel
les informations de manque de clarté de correspondance délivrées en sortie par l'unité de collecte d'informations d'itinéraire comprennent au moins certaines d'informations de position d'un point de manque de clarté de correspondance ou d'une section de manque de clarté de correspondance, d'informations de connexion sur une section de manque de clarté de correspondance, d'informations d'attribut d'itinéraire d'un point de manque de clarté de correspondance ou d'une section de manque de clarté de correspondance, et d'informations qui deviennent une raison de manque de clarté de correspondance.

3. Système de commande de déplacement selon la revendication 1,
dans lequel l'unité d'acquisition d'itinéraire de recherche acquiert une pluralité d'itinéraires de recherche recherchés sur la base de la carte de recherche d'itinéraire ;
dans lequel l'unité de collecte d'informations d'itinéraire collecte la pluralité d'itinéraires de recherche acquis par l'unité d'acquisition d'itinéraire de recherche et la carte de commande de déplacement et sélectionne et délivre en sortie l'un de la pluralité d'itinéraires de recherche sur la base d'informations de manque de clarté de correspondance par rapport à la carte de commande de déplacement de chacun des itinéraires de recherche ;
dans lequel les informations de manque de clarté de correspondance comprennent des informations sur des sections de manque de clarté de correspondance ; et
dans lequel l'itinéraire de recherche sélectionné a la plus petite section de correspondance non claire.

4. Système de commande de déplacement selon la revendication 1, le système de commande de déplacement étant constitué par un appareil de traitement d'informations de recherche d'itinéraire (10) comprenant l'unité de stockage de carte de recherche d'itinéraire et l'unité de recherche d'itinéraire et un appareil de traitement d'informations de commande de déplacement (20) comprenant l'unité de stockage de carte de commande de déplacement et l'unité de collecte d'informations d'itinéraire.

5. Système de commande de déplacement selon la revendication 1,
dans lequel au moins l'une de l'unité de stockage de carte de recherche d'itinéraire, de l'unité de recherche d'itinéraire, de l'unité de stockage de carte de commande de déplacement, de l'unité de collecte d'informations d'itinéraire, et d'une unité de génération d'informations de carte de sortie (202) qui génère des informations de carte de commande de déplacement à délivrer en sortie vers l'extérieur de l'unité de carte de commande de déplacement sur la base de l'itinéraire de commande de déplacement obtenu à partir de l'unité de collecte d'informations d'itinéraire est fournie à l'intérieur d'un appareil de traitement d'informations fourni à l'extérieur d'un véhicule.

6. Système de commande de déplacement selon la revendication 1, dans lequel
lorsque l'unité de collecte d'informations d'itinéraire confirme un itinéraire de recherche en tant qu'itinéraire de commande de déplacement, un occupant d'un véhicule est informé qu'il n'y a pas de section non claire de correspondance ou une petite section non claire de correspondance dans l'itinéraire de recherche confirmé en tant qu'itinéraire de commande de déplacement via un écran et/ou une voix.

7. Système de commande de déplacement selon la revendication 1,
dans lequel l'unité de recherche d'itinéraire recherche une pluralité d'itinéraires de recherche sur la base de la carte de recherche d'itinéraire stockée dans l'unité de stockage de carte de recherche d'itinéraire ; et
dans lequel l'unité de collecte d'informations d'itinéraire collecte la pluralité d'itinéraires de recherche recherchés par l'unité de recherche d'itinéraire et la carte de commande de déplacement stockée dans l'unité de stockage de carte de commande de déplacement, et sélectionne et délivre en sortie l'un de la pluralité d'itinéraires de recherche sur la base d'informations de manque de clarté de correspondance par rapport à la carte de commande de déplacement de chacun des itinéraires de recherche ;
dans lequel les informations de manque de clarté de correspondance comprennent des informations sur des sections de manque de clarté de correspondance ; et
dans lequel l'itinéraire de recherche sélectionné a la plus petite section de correspondance non claire.
